# EUROPÄISCHE PATENTSCHRIFT

(11) **EP 0 590 453 B1**
(45) Veröffentlichungstag und Bekanntmachung des Hinweises auf die Patenterteilung: **29.11.1995**
(21) Anmeldenummer: 93115074.2
(22) Anmeldetag: 20.09.1993
(51) Int. Cl.: F01M 1/02, F02B 67/06, F16H 57/05, F01M 9/10

(54) **Kettentrieb mit einer Rollen-/Hülsen-Kette, insbesondere Nebenantrieb von Brennkraftmaschinen**
Roller chain auxiliary drive for internal combustion engines
Chaîne à rouleaux pour l'entrainement des auxiliaires d'un moteur à combustion interne

(30) Priorität: 02.10.1992 DE 4233251
(43) Veröffentlichungstag der Anmeldung: 06.04.1994
(73) Patentinhaber: Bayerische Motoren Werke Aktiengesellschaft, 80788 München (DE)
(72) Erfinder: Stastny, Johann, A-4400 Steyr (AT); Heer, Siegfried, A-4662 Steyrmühl (AT); Ratzberger, Reinhard, A-4400 Steyr (AT); Brandhofer, Christian, A-4400 Steyr (AT)

(56) Entgegenhaltungen:
- GB-A- 607 806
- GB-A- 681 407
- GB-A- 2 231 087

## Beschreibung

Die Erfindung bezieht sich auf einen Kettentrieb gemäß der im Oberbegriff des Patentanspruches 1 beschriebenen Ausgestaltung.

Aus der DE-C-36 09 579 ist für den Antrieb einer Steuerwelle einer Brennkraftmaschine ein Kettentrieb bekannt mit einer Spannschiene, die in einem Endbereich auf einem hohlen, ein druckgesteuertes Schmierventil aufnehmenden Schwenkzapfen gelagert ist, wobei das Schmiermittel über in der Spannschiene angeordnete Öffnungen auf die Kette gesprüht wird. Diese Anordnung dient insbesondere der Schmierung der Kettenlaschen, aber auch der Schmierung der Spannschiene zur Reduzierung der Reibung zwischen Steuerkette und Spannschiene.

Weiter ist aus der DE-U-92 00 487 eine Einrichtung zur Schmierung der Kette eines Kettenantriebes bekannt, wobei ein Kettenrad mit im jeweiligen Zahngrund über ein Kugelventil endenden, radialen Schmiermittelkanälen ausgebildet ist, und eine in das Kettenrad einlaufende Rollen- oder Hülsen-Kette durch Niederdrücken der Kugelventile eine Schmierung der Kette auslöst.

Bei den vorgenannten beiden Kettentrieben ist es insbesondere bei hochbeanspruchter Kette als nachteilig anzusehen, daß deren Rollen oder Hülsen im Augenblick des Zahneingriffes mit Schmiermittel relativ ungenügend versorgt sind.

Der Erfindung liegt die Aufgabe zugrunde, einen gattungsgemäßen Kettentrieb derart zu gestalten, daß eine verschleiß- und lärmreduzierende Schmiermittelbenetzung der Rollen und/oder Hülsen einer in ein Kettenrad einlaufenden Kette sichergestellt ist.

Diese Aufgabe wird nach den Kennzeichenmerkmalen des Patentanspruches 1 dadurch gelöst, daß eine Spritzdüse der Schmiervorrichtung auf eine als Schmiermittel-Rinne dienende, u-förmig gestaltete Führungsschiene gerichtet ist, die über den Einlaufbereich der Kette in das Kettenrad hinaus verlängert ist zu einem dem Kettenrad benachbarten bogenförmigen Rinnenabschnitt.

Der Vorteil der Erfindung ist, daß die Kette ab der Schmiermittel-Zufuhrstelle bei entsprechend gewählter Schmiermittel-Menge in der Führungsschiene von einem Schmiermittelstrom umspült ist, und die somit erzielbare Tauchschmierung mittels des bogenförmigen Rinnenabschnittes über den Einlaufbereich der Kette in das Kettenrad hinaus verlängert ist. Durch die erfindungsgemäß erzielte Tauchschmierung werden der Verschleiß an Kette und Kettenrad sowie der geräuschbehaftete Aufsetzstoß der Kette am Kettenrad wesentlich vermindert und die Lebensdauer der Kette darüber hinaus durch geringere Kettenlängung erhöht.

Bewirkt der bogenförmige Rinnenabschnitt der Führungsschiene beim Kettenrad der einlaufenden Kette einen gewissen Rückstau des die Tauchschmierung ermöglichenden Schmiermittelstromes, so kann in Ausgestaltung der Erfindung der bogenförmige Rinnenabschnitt andernends der Führungsschiene beim Kettenrad des ablaufenden Kettentrums als Auffangeinrichtung abgeschleuderten Schmiermittels dienen.

Eine besonders wirkungsvolle Tauchschmierung wird in weiterer Ausgestaltung der Erfindung dadurch erreicht, daß die Führungsschiene bzw. Schmiermittel-Rinne mittels eines Deckels mit einer der Spritzdüse zugeordneten Öffnung zu einem geschlossenen Kanal ergänzt ist, wobei der Deckel zumindest nahe dem Kettenrad der einlaufenden Kette endet. Kanalartige Führungsschienen sind an sich aus den deutschen Patentschriften 34 17 099 und 34 17 100 bekannt.

Um Verluste an Schmiermittel aus dem Kanal zu minimieren, steht die als Schmiermittel-Rinne dienende Führungsschiene in weiterer erfindungsgemäßer Ausbildung unter Zwischenlage gummielastischer oder elastomerer Mittel mit dem Deckel in dichter Verbindung.

Weiter wird zur zusätzlichen Verringerung des mechanischen Verschleißes vorgeschlagen, daß die Spritzdüse mit einer Reinöl-Leitung eines Maschinen-Schmiersystems in Verbindung steht. Schließlich kann zur Vermeidung von Sprüh- oder Spritzverlusten, insbesondere bei höheren Schmiermitteltemperaturen, die Spritzdüse unmittelbar am Deckel angeordnet sein.

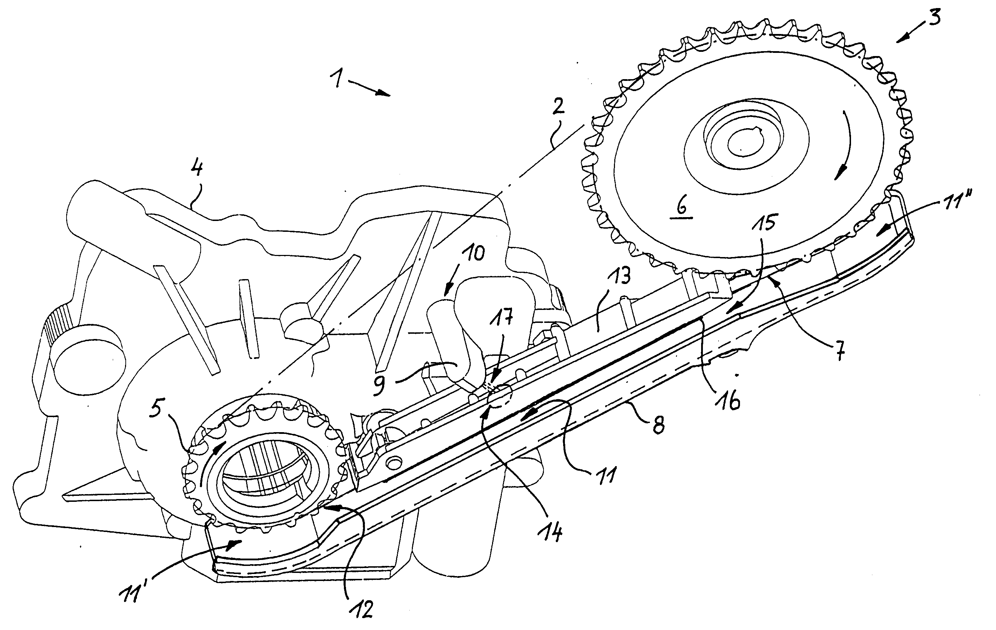

Die Erfindung ist anhand eines in der Zeichnung dargestellten Ausführungsbeispiels beschrieben.

Die Zeichnung zeigt einen Kettentrieb 1 mit einer lediglich symbolisch dargestellten Rollen- oder Hülsen-Kette 2 für einen Nebenantrieb 3 einer nur angedeuteten Brennkraftmaschine 4. Der Kettentrieb 1 umfaßt ein Kettenrad 5 der Brennkraftmaschine 4 und ein Kettenrad 6 im Nebenantrieb 3. Zwischen den vorgenannten Kettenrädern 5 und 6 ist einem Trum 7 der Kette 2 eine Führungsschiene 8 zugeordnet. Die gegenüber ihrer tatsächlichen Anordnung an der Brennkraftmaschine 4 zur besseren Darstellung versetzt gezeigte Führungsschiene 8 ist von u-förmigem Querschnitt.

Eine Spritzdüse 9 einer Ketten-Schmiervorrichtung 10 ist auf die als Schmiermittel-Rinne 11 dienende, u-förmige Führungsschiene 8 gerichtet. Diese ist ferner über den Einlaufbereich 12 der Kette 2 in das Kettenrad 5 hinaus verlängert zu einem dem Kettenrad 5 benachbarten, bogenförmigen Rinnenabschnitt 11'.

Bei entsprechend gewählter Schmiermittel-Zufuhr über die Spritzdüse 9 ermöglicht das in die Rinne 11 eingebrachte und über den Rinnenabschnitt 11' am schnellen Abfließen gehinderte Schmiermittel eine Tauchschmierung der Kette 2 in der Führungsschiene 8 sowie im Einlaufbereich 12 der Kette 2 in das Kettenrad 5.

Die Führungsschiene 8 weist andernends zusätzlich einen dem weiteren Kettenrad 6 - von dem die Kette 2 in die Führungsschiene 8 abläuft - zugeordneten, bogenförmigen Rinnenabschnitt 11'' auf, der als Auffangeinrichtung abgeschleuderten Schmiermittels dient.

Zur Steigerung der Tauchschmierung gegenüber einer einseitig offenen Führungsschiene ist die u-förmige Führungsschiene 8 mittels eines Deckels 13 mit einer der Spritzdüse 9 zugeordneten Öffnung 14 zu einem Kanal 15 ergänzt, wobei der Deckel 13 zumindest nahe dem Kettenrad 5 der einlaufende Kette 2 endet. Dies dient der Steigerung der Kanalwirkung.

Weiter steht die Führungsschiene 8 unter Zwischenlage gummielastischer oder elastomerer Mittel 16 mit dem Deckel 13 in dichter Verbindung, wobei die Montage-Verbindung von Führungsschiene 8 und Deckel 13 mit bekannten Einrichtungen erzielt und daher nicht dargestellt ist.

Die Spritzdüse 9 steht hinsichtlich einer Verschleißminderung des Kettentriebes 1 mit einer Reinöl-Leitung des Schmiersystems der Brennkraftmaschine 4 in Verbindung.

Anstelle der gezeigten Freistrahl-Schmiermittelzufuhr 17 in den Kanal 15 kann die Spritzdüse 9 auch am Deckel 13 unmittelbar angeordnet sein. Schließlich kann eine einen Kanal 15 aufweisende Führungsschiene 8 mit einer oder mehreren, beliebig gewählten Schmiermittel-Zufuhrstellen ausgebildet sein, wodurch eine intensive Tauchschmierung erzielt ist. Schließlich kann die Führungsschiene 8 mittels eines angrenzenden Bauteiles der Brennkraftmaschine abgedeckt sein.

## Patentansprüche

1. Kettentrieb mit einer Rollen-/Hülsen-Kette, insbesondere Nebenantrieb von Brennkraftmaschinen,
- mit einer zwischen Kettenrädern (5, 6) die Kette (2) aufnehmenden Führungsschiene (8) und
- einer Ketten-Schmiervorrichtung (10),
dadurch gekennzeichnet,
- daß eine Spritzdüse (9) der Schmiervorrichtung (10) auf eine als Schmiermittel-Rinne (11) dienende, u-förmig gestaltete Führungsschiene (8) gerichtet ist, die
- über den Einlaufbereich (12) der Kette (2) in das Kettenrad (5) hinaus verlängert ist zu einem dem Kettenrad (5) benachbarten, bogenförmigen Rinnenabschnitt (11').

2. Kettentrieb nach Anspruch 1, dadurch gekennzeichnet, daß die Führungsschiene (8) andernends zusätzlich einen dem weiteren Kettenrad (6) im Bereich der ablaufenden Kette (2) zugeordneten, bogenförmigen Rinnenabschnitt (11'') aufweist.

3. Kettentrieb nach Anspruch 1 oder 2, dadurch gekennzeichnet,
- daß die Führungsschiene (8) mittels eines Deckels (13) mit einer der Spritzdüse (9) zugeordneten Öffnung (14) zu einem Kanal (15) ergänzt ist, wobei
- der Deckel (13) zumindest nahe dem Kettenrad (5) der einlaufenden Kette (2) endet.

4. Kettentrieb nach den Ansprüchen 1 - 3, dadurch gekennzeichnet, daß die Führungsschiene (8) unter Zwischenlage gummielastischer oder elastomerer Mittel (16) mit dem Deckel (13) in dichter Verbindung steht.

5. Kettentrieb nach den Ansprüchen 1 - 4, dadurch gekennzeichnet, daß die Spritzdüse (9) mit einer Reinöl-Leitung eines Maschinen-Schmiersystems in Verbindung steht.

6. Kettentrieb nach den Ansprüchen 1 - 5, dadurch gekennzeichnet, daß die Spritzdüse (9) am Deckel (13) angeordnet ist.

7. Kettentrieb nach einem oder mehreren der Ansprüche 1 - 6, dadurch gekennzeichnet, daß eine einen Kanal (15) aufweisende Führungsschiene (8) mit einer oder mehreren, beliebig gewählten Schmiermittel-Zufuhrstellen ausgebildet ist.

8. Kettentrieb nach einem oder mehreren der Ansprüche 1 - 7, dadurch gekennzeichnet, daß die Führungsschiene (8) mittels eines angrenzenden Bauteiles der Brennkraftmaschine abdeckt ist.

## Claims

1. A chain drive with a roller/sleeve-type chain, especially the secondary drive of internal combustion engines,
- with a guide rail (8) between the sprocket wheels (5, 6) accommodating the chain (2) and
- a chain lubricating device (10),
characterised in that
- a spray nozzle (9) of the lubricating device (10) is directed to a U-shaped guide rail (8) serving as a lubricant channel (11),
- extended beyond the run-in region (12) of the chain (2) with the sprocket wheel (5) to a curved channel section (11') adjoining the sprocket wheel (5).

2. A chain drive according to claim 1, characterised in that the guide rail (8) is additionally provided at its other end with a curved channel section (11'') assigned to the further sprocket wheel (6) in the run-off region of the chain (2).

3. A chain drive according to claim 1 or claim 2, characterised in that
- the guide rail (8) is supplemented by means of a cover (13) with an opening (14) to a channel (15) for the spray nozzle (9), whereby
- the cover (13) ends at least close to the sprocket wheel (5) of the incoming chain (2).

4. A chain drive according to claims 1 to 3, characterised in that the guide rail (8) is tightly connected to the cover (13) through the interposition of rubber-elastic or elastomeric means (16).

5. A chain drive according to claims 1 to 4, characterised in that the spray nozzle (9) is connected to a pure-oil line of an automatic lubrication system.

6. A chain drive according to claims 1 to 5, characterised in that the spray nozzle (9) is arranged on the cover (13).

7. A chain drive according to one or more of claims 1 to 6, characterised in that a guide rail (8) provided with a channel (15) has one or more lubricant feed points chosen at will.

8. A chain drive according to one or more of claims 1 to 7, characterised in that the guide rail (8) is covered by an adjoining component part of the internal combustion engine.

## Revendications

1. Entraînement à chaîne comprenant une chaîne à galets notamment entraînement auxiliaire pour un moteur à combustion interne, comprenant :
- un rail de guidage (8) recevant la chaîne (2) entre les roues à chaîne (5, 6), et
- un premier dispositif de graissage de chaîne (10),
caractérisé en ce que :
- une buse (9) du dispositif de graissage (10) est dirigée vers un rail de guidage (8) en forme de U, servant de goulotte d'agent de graissage (11),
- ce rail étant prolongé au-delà de la zone d'arrivée de la chaîne (2) sur la roue à chaîne (5) par un segment de goulotte (11') en arc de cercle, voisin de la roue à chaîne (5).

2. Entraînement à chaîne selon la revendication 1, caractérisé en ce que le rail de guidage comporte à son autre extrémité, un segment de goulotte (11'') en arc de cercle, complémentaire, associé à la zone de sortie de la chaîne (2).

3. Entraînement à chaîne selon la revendication 1 ou 2, caractérisé en ce que :
- le rail de guidage (8) est complété par un couvercle (13) avec un orifice (14) associé à la buse (9) pour former un canal (15) et
- le couvercle (13) se termine au moins à proximité de l'endroit où la chaîne (2) arrive sur la roue à chaîne (5).

4. Entraînement à chaîne selon les revendications 1 à 3, caractérisé en ce que le rail de guidage (8) est relié de manière étanche au couvercle (13) avec inter-position de moyens (16) en élastomère ou ayant l'élasticité du caoutchouc.

5. Entraînement à chaîne selon les revendications 1 à 4, caractérisé en ce que la buse (9) est reliée à une conduite d'huile pure du système de graissage du moteur.

6. Entraînement à chaîne selon l'une des revendications 1 à 5, caractérisé en ce que la buse (9) est prévue sur le couvercle (13).

7. Entraînement à chaîne selon l'une ou plusieurs des revendications 1 à 6, caractérisé par un rail de guidage (8) muni d'un canal (15) ayant un ou plusieurs points d'alimentation en agent lubrifiant, choisis de manière quelconque.

8. Entraînement à chaîne selon l'une ou plusieurs des revendications 1-7, caractérisé en ce que le rail de guidage (8) est recouvert par une partie adjacente du moteur à combustion interne.
